# EUROPEAN PATENT SPECIFICATION

(11) **EP 4 038 517 B1**
(45) Date of publication and mention of the grant of the patent: **25.11.2026**
(21) Application number: 19947603.7
(22) Date of filing: 02.10.2019
(51) Int. Cl.: H04M 1/72403, G06F 16/50, G06Q 30/06, G06F 17/40, G06F 16/58, G06V 10/75

(54) **METHOD AND APPARATUS FOR COLOR LOOKUP USING A MOBILE DEVICE**
VERFAHREN UND VORRICHTUNG ZUR FARBSUCHE UNTER VERWENDUNG EINER MOBILEN VORRICHTUNG
PROCÉDÉ ET APPAREIL POUR UNE RECHERCHE DE COULEUR À L'AIDE D'UN DISPOSITIF MOBILE

(43) Date of publication of application: 10.08.2022
(73) Proprietor: Datacolor, Inc., Lawrenceville, NJ 08648 (US)
(72) Inventor: WEI, Hong, Princeton, New Jersey 08540 (US); DESHPANDE, Sachin, Plainsboro, New Jersey 08540 (US); PARK, Taeyoung, Princeton, New Jersey 08540 (US)
(74) Representative: Marks & Clerk LLP
(86) International application number: PCT/US2019/054306
(87) International publication number: WO 2021/066822

(56) References cited:
- EP-B1- 2 116 896
- WO-A1-2019/133505
- US-A1- 2008 094 474
- US-A1- 2008 094 474
- US-A1- 2011 022 719
- US-A1- 2014 240 587
- US-A1- 2014 240 587
- US-A1- 2015 332 479
- US-A1- 2015 332 479
- US-A1- 2018 124 259
- US-A1- 2018 129 845

## Description

### FIELD OF THE DISCLOSURE

The present invention generally relates to the measurement of color, and more specifically relates to color lookup using a smart phone.

### BACKGROUND

Many industries, including textiles, coatings, and the like, rely on color matching. Color matching may involve identifying a target color (e.g., from an object or from a known standard) and subsequently reproducing the target color in a color mixture, i.e., so that any visual difference between the color mixture and the target color is minimized. For instance, a customer may ask for a can of paint to be mixed in a color that matches the color of a wall in the customer's home, so that touch-ups to the wall can be made in a manner that "blends in." Similarly, an automobile manufacturer may ask that a coating be mixed in a color that matches the color of existing automobiles built by the manufacturer, in order to ensure color consistency across the manufacturer's line. US2015/332479 A1 relates to a system and method for categorizing color-based product and data based on a universal digital color language. US 2014/240587 A1 relates to systems and method for processing image data obtained using an image sensor of a digital imaging device. US 2018/129845 A1 relates to calibration methods and an apparatus for selecting exposure settings and achieving white balance in digital cameras.

### SUMMARY OF THE DISCLOSURE

The invention provides a method and a non-transitory computer-readable medium as set out in the accompanying claims.

### BRIEF DESCRIPTION OF THE DRAWINGS

The teachings of the present disclosure can be readily understood by considering the following detailed description in conjunction with the accompanying drawings, in which:
FIG. 1A illustrates an example system in which examples of the present disclosure for color lookup using a mobile device may operate;
FIG. 1B illustrates another example system in which examples of the present disclosure for color lookup using a mobile device may operate;
FIG. 2 is a schematic diagram illustrating one example of an array of photosensors and a corresponding array of color filters arranged in a Bayer pattern;
FIG. 3 is a flow chart illustrating one example of a method for color lookup using a mobile device;
FIG. 4 is a flow chart illustrating another example of a method for color lookup using a mobile device; and
FIG. 5 is a high level block diagram of the calibration method that is implemented using a general purpose computing device.

### DETAILED DESCRIPTION

In one example, the present invention includes a method, apparatus, and non-transitory computer-readable medium for color lookup using a mobile device. As discussed above, color matching may involve identifying a target color and subsequently reproducing the target color in a color mixture, i.e., so that any visual difference between the color mixture and the target color is minimized. Accurate identification of the target color, also referred to as "color lookup," is therefore vital to the color matching process. Many existing systems for color lookup include colorimeters that can be paired with a mobile device, such as a smart phone or a tablet computer, to assist users in identifying and communicating colors. However, depending on the circumstances, it may not always be convenient for the user to carry or use the colorimeter.

Examples of the present disclosure provide a method by which a mobile device, operating on its own, can provide the same color lookup functionality as a mobile device paired with a colorimeter. In one example, the mobile device's light emitting diode (LED) flashlight/flash may be used as a light source to illuminate the target color, while the mobile device's rear-facing camera may be used as the color sensor. The ambient light may be overflooded by maintaining a maximum intensity of light emission by the flashlight while bringing the mobile device very close to an object of a target color.

The mobile device may then capture an image of the object, and an application (either installed and executing locally on the mobile device or hosted on a remote device such as a server) may process the image to estimate a first set of values that describes the target color in a first color space that approximates the perception of color by the human eye (e.g., the International Commission on Illumination (CIE) 1931 XYZ, or CIEXYZ, color space). The application may further convert the first set of values to a second set of values that describes the target color in a second, different color space (e.g., the CIE L*a*b*, or CIELAB, color space). The second set of values may be used to search an existing color database for a match (e.g., a closest color from a palette of colors). When the distance between the mobile device and the target color is set to a constant, accurate and repeatable color matching can be achieved.

Within the context of the present disclosure, "color tristimulus values" are understood to be values as defined by the CIE XYZ color space, e.g., in which Y represents luminance, Z is quasi-equal to blue, and X represents a mix of response curves chosen to be non-negative. CIEXYZ values are linear in light intensity and thus are amenable to matrix-based estimation from camera values. Furthermore, within the context of the present disclosure, "L*a*b* values" are understood to be values in the CIELAB color space, e.g., in which color is expressed as three values: L* for the lightness from black (0) to white (100); a* from green (-) to red (+); and b* from blue (-) to yellow (+). The CIELAB color space is considered more perceptually uniform than the CIEXYZ color space and is intended to approximate the perception of color by the human eye.

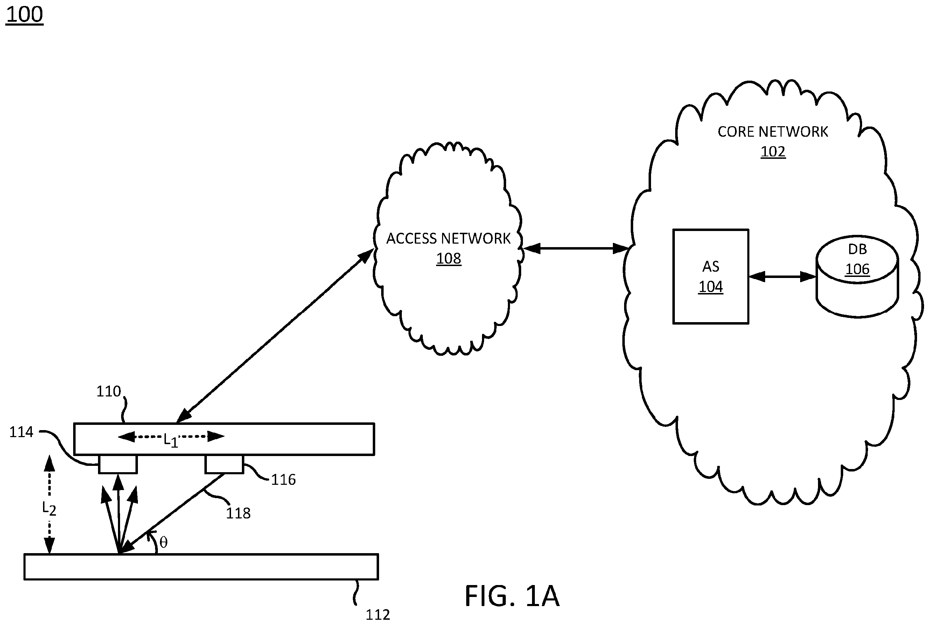

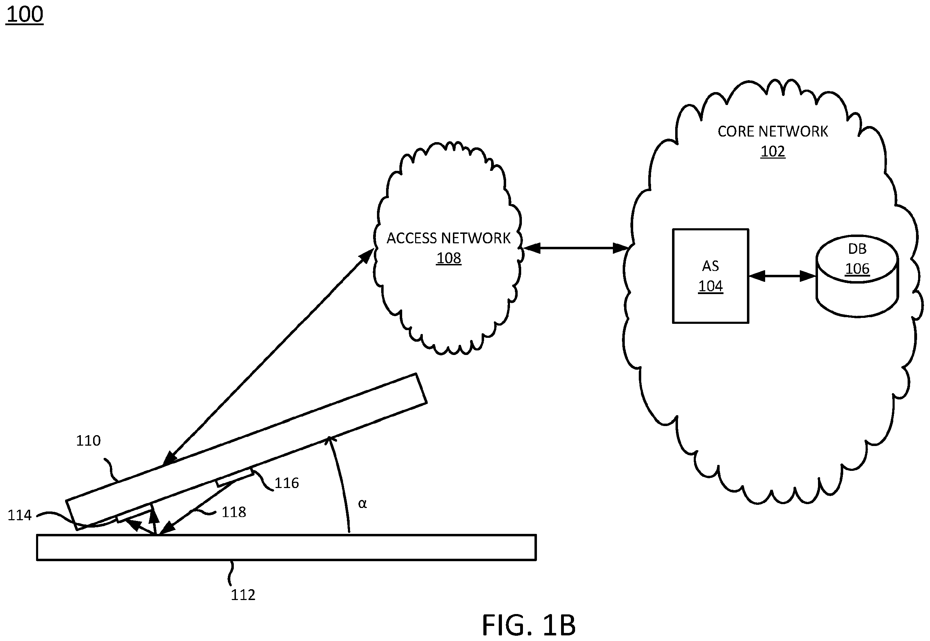

To further aid in understanding the present disclosure, FIG. 1A illustrates an example system 100 in which examples of the present disclosure for color lookup using a mobile device may operate. FIG. 1B illustrates another example system in which examples of the present disclosure for color lookup using a mobile device may operate. The components of FIG. 1A and FIG. 1B are the same; however, the orientation of the mobile device relative to the object whose color is being looked up differs as discussed in further detail below.

The system 100 may include one or more types of communication networks, including a packet network such as an Internet Protocol (IP) network (e.g., an IP Multimedia Subsystem (IMS) network), an asynchronous transfer mode (ATM) network, a wireless network, a cellular network (e.g., 2G, 3G, and the like), a long term evolution (LTE) network, 5G and the like, related to the current disclosure. It should be noted that an IP network is broadly defined as a network that uses Internet Protocol to exchange data packets. Additional example IP networks include Voice over IP (VoIP) networks, Service over IP (SoIP) networks, and the like.

In one example, the system 100 may comprise a network 102, e.g., a telecommunication service provider network, a core network, an enterprise network comprising infrastructure for computing and providing communications services of a business, an educational institution, a governmental service, or other enterprises (also referred to as the/a "cloud").

The core network 102 may be in communication with one or more access networks, such as access network 108. The access network 108 may include a wireless access network (e.g., a WiFi network and the like), a mobile or cellular access network, a PSTN access network, a cable access network, a wired access network, or the like. The core network 102 and the access network 108 may be operated by different service providers, the same service provider, or a combination thereof.

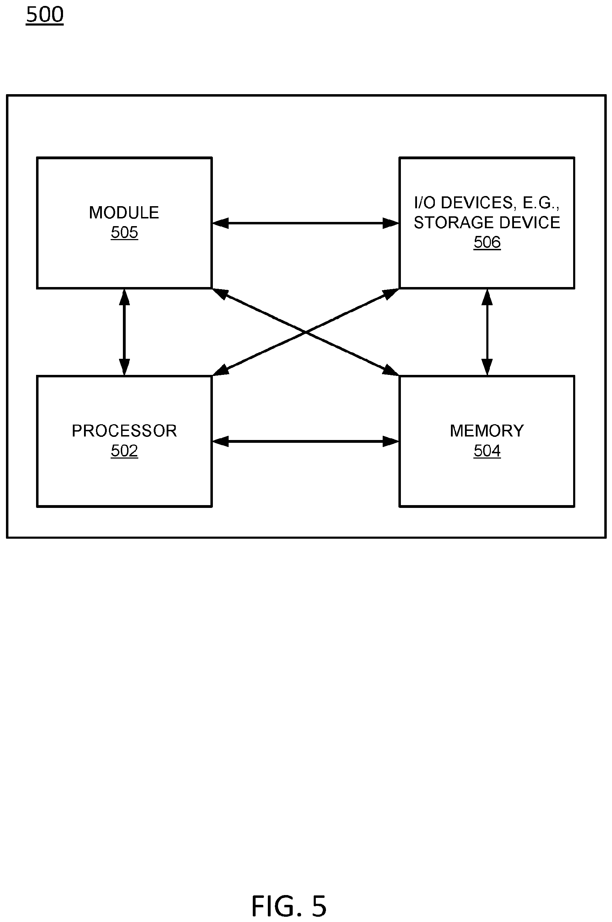

In accordance with the present disclosure, the core network 102 may include an application server (AS) 104 and a database (DB) 106. The AS 104 may comprise a computing system or server, such as the computing system 500 depicted in FIG. 5, and may be configured to provide one or more operations or functions for color lookup, as described herein. For instance, the AS 104 may be configured to obtain images or a target color from a mobile device, to measure the target color, and to identify a candidate color in a color library that most closely matches the candidate color.

It should be noted that as used herein, the terms "configure," and "reconfigure" may refer to programming or loading a processing system with computer-readable/computer-executable instructions, code, and/or programs, e.g., in a distributed or non-distributed memory, which when executed by a processor, or processors, of the processing system within a same device or within distributed devices, may cause the processing system to perform various functions. Such terms may also encompass providing variables, data values, tables, objects, or other data structures or the like which may cause a processing system executing computer-readable instructions, code, and/or programs to function differently depending upon the values of the variables or other data structures that are provided. As referred to herein a "processing system" may comprise a computing device including one or more processors, or cores (e.g., as illustrated in FIG. 5 and discussed below) or multiple computing devices collectively configured to perform various steps, functions, and/or operations in accordance with the present disclosure.

The AS 104 may be communicatively coupled to a database (DB) 106. The DB 106 may store data that is used by the AS 104 to perform operations or functions for color lookup, as described herein. For instance, the DB 106 may store data including a color library. The color library may include a palette, or a plurality of different colors, where each color in the plurality of different colors may be considered a candidate for matching to a target color, as discussed in further detail below. In one example, the color library may include, for each color included in the color library: a color name, a numerical color identifier, L*a*b* values describing the color, and or other identifying information (e.g., a source or manufacturer of the color, whether the color belongs to a curated collection of colors, etc.). The color library may be provided by a manufacturer of a software application that is used for color lookup. Alternatively or in addition, at least a portion of the color library may be provided by one or more manufacturers of commercial items. For instance, the color library may include fan decks from paint manufacturers, textile manufacturers, and the like.

Although only a single application server (AS) 104 and a single database (DB) 106 are illustrated in FIGs. 1A and 1B, it should be noted that any number of servers and databases may be deployed. For instance, a plurality of servers and databases may operate in a distributed and/or coordinated manner as a processing system to perform operations for color lookup, in accordance with the present disclosure. For ease of illustration, various additional elements of network 102 are omitted from FIGs. 1A and 1B.

In one example, the access network 108 may be in communication with one or more user endpoint devices, such as a mobile device 110. In one example, the mobile device 110 may be any type of mobile endpoint device, such as a cellular telephone, a smart phone, a tablet computer, a laptop computer, a netbook, an ultrabook, a portable media device (e.g., an MP3 player), a portable gaming device, a digital media player, and the like, or even a wearable device such as a smart watch. The mobile device 110 may be configured as a computer similar to that illustrated in FIG. 5 and described in greater detail below. In one example, the mobile device 110 includes an integrated digital camera 114 and a light source (e.g., a light emitting diode or LED flashlight/flash) 116.

In one example, the integrated digital camera 114 is a red, green, blue (RGB) camera comprising a two-dimensional (2D) array of photosensors and an array of red, green, and blue color filters deposited over the photosensors. The color filters may be arranged in a "Bayer" pattern, i.e., such that each photosensor is covered by one color filter, and such that fifty percent of the color filters are green, twenty-five percent of the color filters are red, and twenty-five percent of the color filters are blue. The larger number of green color filters in the Bayer pattern reflects the fact that the human eye is more sensitive to green light than to red light or blue light.

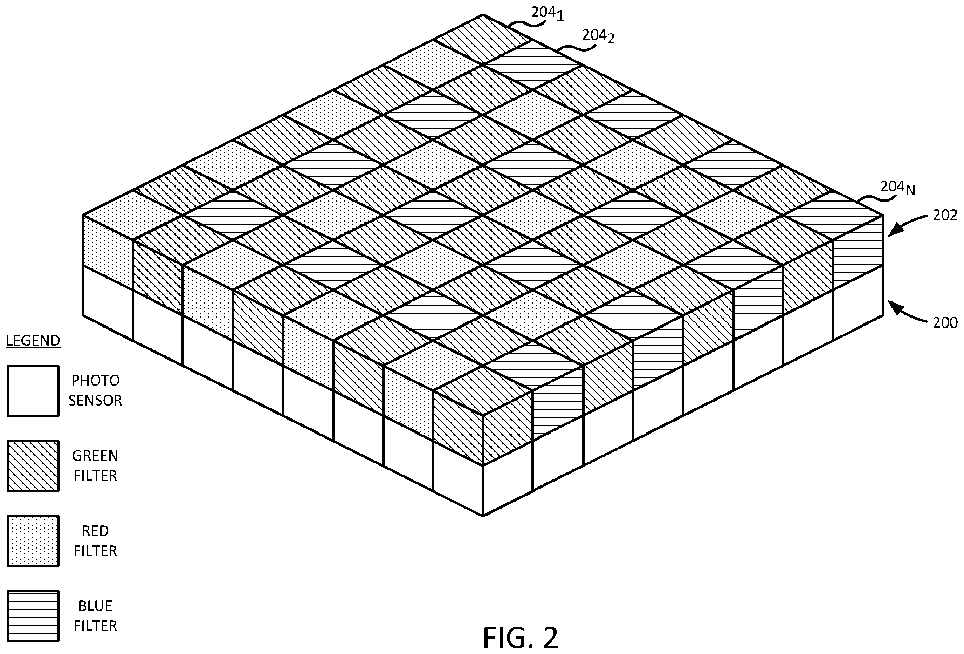

FIG. 2 is a schematic diagram illustrating one example of an array 200 of photosensors and a corresponding array 202 of color filters arranged in a Bayer pattern. As illustrated, the array 200 of photosensors comprises a plurality of photosensors arranged in a square (e.g., N x N) array. Above the array 200 of photosensors is the array 202 of color filters. The array 202 of color filters includes red, green, and blue color filters as noted in the legend.

To achieve a Bayer pattern of fifty percent green color filters, twenty-five percent red filters, and twenty-five percent blue filters, a first row 204₁ of the array 202 of color filters may comprise a first pattern of alternating red and green filters. A second row 204₂ of the array 202 of color filters, which is adjacent to the first row 204₁, may comprise a second pattern of alternating green and blue filters. The first pattern and the second pattern may be alternated, row-by-row, in the array 202 of color filters as shown. In one example, no green filter of the array 202 of color filters is positioned directly adjacent to another green filter. However, the green filters may be positioned diagonally relative to each other.

Referring back to FIGs. 1A and 1B, when a broadband visible light 118 (which contains red, green, and blue light) is incident on the integrated digital camera's array 200 of photosensors, the broadband visible light 118 may be filtered by the color filters prior to being collected by the photosensors. That is, the color filters will allow the corresponding colors in the broadband visible light 118 to pass through to the photosensors, but will block other colors of the broadband visible light 118. For instance, the red color filters will allow red light to pass through to the photosensors; the green color filters will allow green light to pass through to the photosensors; and the blue color filters will allow blue light to pass through to the photosensors. A photosensor beneath a given color filter will collect the signal of the light that the given color filter has allowed to pass through. Thus, the responses of the color filters in the integrated digital camera 114 are similar to the responses of the sensors used in a typical colorimeter.

In one example, the integrated digital camera 114 may be color calibrated prior to being used to perform any sort of color lookup. To calibrate the integrated digital camera 114, the integrated digital camera 114 may be used to capture images of a set of m training colors (i.e., colors whose color tristimulus values are already known).

Next, for each image, the raw counts (i.e., the numbers of pixels of each color in the image) for each color filter may be averaged to create three averaged raw counts: a red channel averaged raw count d_{R}, a green channel averaged raw count d_{G}, and a blue channel averaged raw count d_{B}. Thus, a single color measurement D, made by the integrated digital camera, may be defined as a 3 x m matrix D, where: $D = \left[\begin{matrix}{d}_{R} \\ {d}_{G} \\ {d}_{B}\end{matrix}\right]$ (EQN. 1).

In addition, a 3 x m matrix R_{T} may be constructed to contain the known color tristimulus values of the m training colors (under a predefined standard illuminant and CIE color match functions).

To calibrate the integrated digital camera, then, the 3 x 3 matrix M and the offset 1 x m vector b may be estimated, where M and b map the matrix D as closely as possible to the matrix R_{T}, such that: ${R}_{T} = MD + b$ (EQN. 2).

EQN. 2 may be further expressed as a homogenous equation, such that: ${R}_{T} = {M}_{A} {D}_{A}$ (EQN. 3). where M_{A} = [M b] is a 3 x 4 matrix comprising the matrix M right-augmented by the column vector b, and D_{A} = [D' 1'] is a 4 x m matrix comprising the matrix D augmented from the bottom by a row m-vector 1 of ones. In this case, D' is the transpose of the matrix D.

To estimate M_{A}, the following least-square approximation may be used: ${M}_{A} = {R}_{T} pinv \left({D}_{A}\right) = {R}_{T} {D}_{A} ′ {\left({D}_{A} {D}_{A}′\right)}^{- 1}$ (EQN. 4)

In one example, the mobile device 110 may be calibrated in the factory, e.g., by the mobile device's manufacturer. In this case, the calibration matrix may be stored either in the local memory of the mobile device 110, or at a remote server.

In another example, the set of m training colors may be printed on a paper card or sheet (e.g., a five inch by seven inch card or sheet, on which each training color may be printed in at least a one inch by one inch square for easy alignment during measurement). A paper card or sheet of this nature may allow the calibration matrix to be easily re-generated by the end user after the mobile device 100 leaves the factory (e.g., to compensate for long-term drift of the integrated digital camera 114 and/or light source 116), or may allow the end user to generate the calibration matrix for the first time in the field (e.g., where the mobile device 100 was not calibrated in the factory). The paper card or sheet may include a quick response (QR) code or other machine-readable code that, when scanned, will cause the color tristimulus values of the training colors to be automatically downloaded (e.g., from a remote server or from the local memory of the mobile device 110).

In yet another example, the mobile device 110 may skip the calibration but use an averaged color calibration matrix that is generated by the manufacturer of the phone or of the software application that performs the color lookup. In this case, a plurality of mobile devices of the same make and model as the mobile device 110 may be used as master instruments. The averaged color calibration matrix for each mobile device mark and model may be stored in the software application (which may be subsequently loaded onto the mobile device, as discussed below) or at a remote server.

The use of the m training colors for calibration, as discussed above, comprises a linear correction. However, in another example, an abbreviated correction of the mobile device 110 may be performed in place of or in addition to a full re-calibration. The abbreviated correction may also be linear, but may be simpler than a full re-calibration, as the abbreviated correction does not require a large set of training colors. The abbreviated correction may utilize a white patch and a black patch in the mobile device 110, along with a pre-loaded color calibration matrix that corresponds to the make and model of the mobile device 110. The abbreviated correction may compensate for variation of the integrated digital camera's sensitivity and/or variation of the light source's flash intensity from mobile device to mobile device (of the same make and model).

A patch of black and patch of white may be printed on a small paper sheet or card, similar to the set of test colors described above. Alternatively, a white sample and a black sample provided from a commercial fandeck or provided by a provider of the software application that performs the color lookup may be used. The raw counts of the black color and the white color from the red, green, and blue channels may be measured using master instruments of the same make and model as the mobile device 110 (e.g., by the manufacturer of the mobile device 110 or by the manufacturer of the software application). [*d̃_{R,wht}, d̃_{G,wht}, d̃_{B,wht}*] may express the raw counts of the white color as measured by the master instruments, while [*d̃_{R,blk}, d̃_{G,blk}, d̃_{B,blk}*] may express the raw counts of the black color as measured by the master instruments. These raw counts may be saved in the local memory of the mobile device 110 or on a remote server.

An end user may subsequently measure the same black and white samples using the mobile device 110. [*d_{R,wht}, d_{G,wht}, d_{B,wht}*] may express the raw counts of the white color as measured by the mobile device 110, while [*d_{R,blk}, d_{G,blk}, d_{B,blk}*] may express the raw counts of the black color as measured by the mobile device 110. A linear mapping that will bring the raw counts of the red channel from the mobile device 110 closer to the raw counts of the red channel from the master instruments may be expressed as: $\left\{\begin{matrix}{{d}^{˜}}_{R , wht} = {k}_{1 , R} \times {d}_{R , wht} + {k}_{2 , R} \\ {{d}^{˜}}_{R , blk} = {k}_{1 , R} \times {d}_{R , blk} + {k}_{2 , R}\end{matrix}\right.$ (EQN. 5). where the linear correction coefficients for the red channel (i.e., k_{1,R} and k_{2,R})can be solved using simple linear algebra as follows: $\begin{matrix}{k}_{1 , R} = \frac{{{d}^{˜}}_{R , wht} - {{d}^{˜}}_{R , blk}}{{d}_{R , wht} - {d}_{R , blk}} \\ {k}_{2 , R} = \frac{{{d}^{˜}}_{R , blk} \times {d}_{R , wht} - {{d}^{˜}}_{R , wht} \times {d}_{R , blk}}{{d}_{R , wht} - {d}_{R , blk}}\end{matrix}$ (EQN. 6) Similar equations may be used to solve the linear correction coefficients for the green and blue channels. The full set of linear correction coefficients (i.e., k_{1,R}, k_{2,R}, k_{1,G}, k_{2,G}, k_{1,B}, and k_{2,B}) may be saved in the local memory of the mobile device 110 or on a remote server.

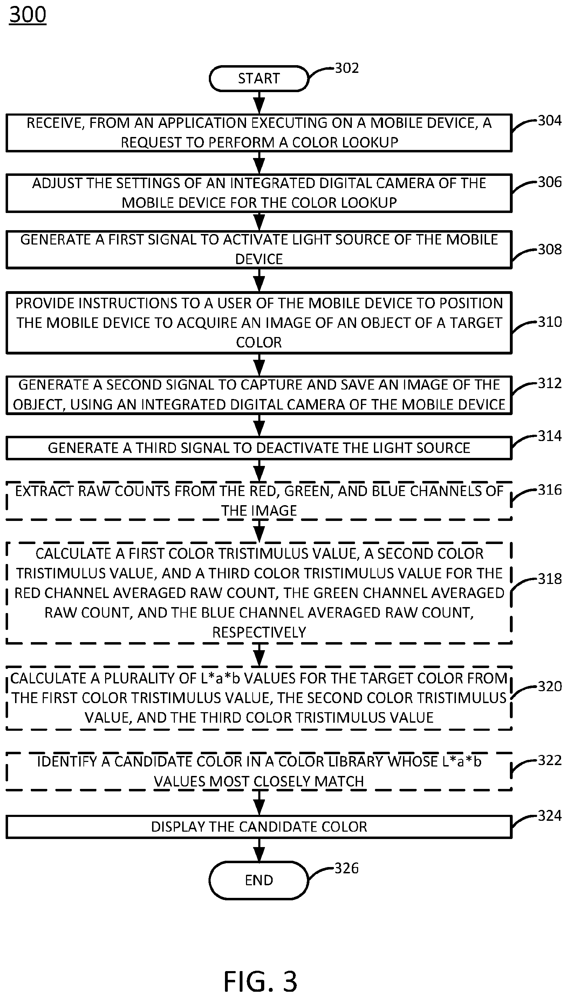

The raw counts generated from an arbitrary measurement may first be corrected according to: $\left\{\begin{matrix}{d}_{R , corrected} = {k}_{1 , R} \times {d}_{R} + {k}_{2 , R} \\ {d}_{G , corrected} = {k}_{1 , G} \times {d}_{G} + {k}_{2 , G} \\ {d}_{B , corrected} = {k}_{1 , B} \times {d}_{B} + {k}_{2 , B}\end{matrix}\right.$ (EQN. 7) In one example, the corrected raw counts may subsequently be converted into the color tristimulus values in accordance with EQN. 9, which is discussed in further detail in connection with FIG. 3. In another example (e.g., where a linear correction has been performed using a white patch and a black patch as described above), however, the averaged color conversion matrix that is generated using the plurality of master instruments may be used to convert the corrected raw counts into the color tristimulus values.

In some examples, the linear correction (using m training colors) and the abbreviated correction (using black and white samples) may be performed on the same system, i.e., the linear correction and the abbreviated correction are not mutually exclusive, but may work together. For instance, in one example, the linear correction using m training colors may be applied to a master instrument (e.g., mobile device), while the abbreviated correction using the black and white samples may be applied at least once to each individual device of the same make and model as the master instrument.

In one example, the mobile device 110 may be configured to host an application that communicates with the AS 104 and/or DB for performing color lookup. For instance, the application may guide a user of the mobile device 110 through a process whereby the integrated digital camera 114 is used to capture an image of an object 112 of a target color (where the light source 116 is used to illuminate the object 112 during image capture). The application may further guide the user through steps by which the mobile device 110 is used to measure the target color (e.g., identify color tristimulus values or L*a*b* values of the target color) in the image of the object 112. The application may further guide the user through steps whereby the mobile device 110 is used to perform a search in a color library connected to the mobile device 110 (e.g., database 106), where the search identifies a candidate color in the color library that most closely matches the target color.

In other examples, however, the application that is hosted on the mobile device 100 may guide the user through the steps of capturing the image of the object 112. The application may then guide the user through steps whereby the image is transmitted from the mobile device 110 to a remote server (e.g., AS 104), where the remote server measures the target color in the image, performs the search of the color library, and transmits a result of the search back to the mobile device 110. In this case, the memory and the processing resources of the mobile device 110 may be conserved by offloading the most processing intensive steps of the process to the remote server.

It should also be noted that the system 100 has been simplified. Thus, it should be noted that the system 100 may be implemented in a different form than that which is illustrated in FIGs. 1A and 1B without departing from the scope of the present disclosure.

FIG. 3 is a flow chart illustrating one example of a method 300 for color lookup using a mobile device. In one example, the method 300 may be performed, for instance, by the mobile device 110 of FIGs. 1A and 1B and/or by another computing device that is communicatively coupled to the mobile device 110. In another example, the method 500 may be performed by a processor of a computing device, such as the processor 502 illustrated in FIG. 5. For the sake of example, the method 300 is described below as being performed by a processing system.

The method 300 begins in step 302. In step 304, the processing system may receive a request to perform a color lookup. In one example, the request may be received from an application that is installed on a user's mobile device. For instance, the user may submit the request via a graphical user interface (GUI) that the application presents on the display of the mobile device.

In step 306, the processing system may adjust the settings of an integrated digital camera of the mobile device for color lookup. In one example, the settings that are adjusted may include shutter speed, sensitivity of the image sensor to light (e.g., ISO), and image format, among others. These settings may be adjusted through the mobile device's application programming interface (API). The optimal settings for color lookup may vary depending upon the make and model of the mobile device. However, in one example, the ISO may be set to the smallest value possible (e.g., fifteen) in order to minimize system noise. The shutter speed may be set so that the raw counts obtained from a white color sample are approximately two thirds of the maximum possible count (e.g., 1/800 seconds), in order to minimize saturation of the integrated digital camera. Autofocus functions may be disabled or set to zero.

In step 308, the processing system may generate a first signal to activate a light source of the mobile device. For instance, the mobile device may be a smart phone or a tablet computer, as discussed above, and the light source may be an LED flash or flashlight of the smart phone or tablet computer. In one example, the first signal activates the light source at the light source's highest intensity setting, such that the light source continues to emit light at the highest intensity setting until a subsequent signal is received to deactivate the light source. In a further example, if the auto-tuning features of the light source are not already disabled when step 310 is performed, then the first signal to may include a signal to deactivate the auto-tuning features.

In step 310, the processing system may provide instructions to the user to position the mobile device to acquire an image of a target color (e.g., a color that the user may be trying to identify via the color lookup). For instance, the processing system may track the position of the mobile device relative to an object of the target color via a "live image," using the integrated digital camera. Based on the live image, the processing system may provide instructions to the user (e.g., text instructions, audible instructions, an image overlay or box within which to position an image of the object, etc.) to adjust the position of the mobile device for optimal image quality.

In one example, the optimal position ensures that a distance between the mobile device and the object (e.g., a distance between the integrated digital camera 114 of the mobile device 110 and the object 112, as indicated by L₂ in FIG. 1A) is approximately equal to the distance between the integrated digital camera and a light source (e.g., an LED flashlight) of the mobile device (indicated as L₁ in FIG. 1A). This positioning forms a 45/0 illumination geometry (e.g., where θ in FIG. 1A equals forty-five degrees). However, in other examples, the positioning is not defined by a 45/0 geometry.

In the case where the optimal position is defined by a 45/0 geometry, the position may be maintained in a number of different ways. For instance, in one example, where the object of the target color is glossy or semi-glossy, L₂ may be determined by detecting a specular "hot spot" in the live image. The hot spot is an artifact created by the specular reflection of the mobile device's light source from a glossy object. Specifically, a portion of the light that is emitted by the light source will be directly reflected by the object, will enter the integrated digital camera, and will show as a very bright spot (or "hot spot") in the resulting image. The location and the size of the area on the object that would directly reflect the emitted light to form the hot spot does not tend to change as the object is moved in a direction that is normal to the integrated digital camera's lens. However, as the object is brought closer to the mobile device, the integrated digital camera's field of view shrinks. As a result, the hot spot may appear to move toward the edge of the image and may appear larger.

Because of the one-to-one relationship between the integrated digital camera's field of view and the distance between the object and the mobile device, the hot spot's size and location may be the same for mobile devices of the same make and model. Conversely, the hot spot's size and location may vary among different makes and models of mobile devices. Thus, determining the optimal location of the hot spot may allow one to define the optimal distance between the mobile device and the object. In other words, for a mobile device of a given make and model, the size and location of the hot spot is closely correlated with the distance between the mobile device and the object. Moreover, this correlation is invariant to the color of the object.

In one example, the processing system may instruct the user to hold the mobile device parallel to the object and to move the mobile device closer to the object (while still maintaining the parallel relative orientation as shown in FIG. 1A) while the processing system observes the resulting live image. The hot spot, if shown, will move toward the edge of the image as the distance between the mobile device and the object shrinks, as discussed above. When the hot spot reaches the known optimal location (which may be stored for the particular make and model of mobile device in application software, the mobile device local memory, or on a remote server), this may indicate that the distance between the mobile device and the object is optimal for color lookup.

In another example where the optimal position is defined by a 45/0 geometry, the mobile device may be equipped with a specially designed case (e.g., a mobile phone case) that holds the mobile device in a parallel orientation relative to the object of the target dolor, while also defining a distance between the camera and the object of the target color that is sufficient to achieve the optimal position. For instance, the case may have a thickness that is sufficient to create a gap between the integrated digital camera of the mobile device and the object of the target color when the mobile device is resting on the object of the target color. The size of the gap may be sufficient to create the 45/0 illumination geometry shown in FIG. 1A.

As discussed above, in some cases, the optimal position may not be defined by a 45/0 geometry. For instance, in another example, the optimal distance between the mobile device and the object may be determined by placing the mobile device on the target at a predefined angle α as shown in FIG. 1B (where the predefined angle α may vary according to the particular make and model of the mobile device). This allow the optimum distance between the mobile device and the object to be maintained indirectly.

For instance, the predefined angle α for the make and model of the mobile device may be looked up (e.g., in application software in, the mobile device local memory, or on a remote server). The processing system may instruct the user to hold the mobile device near the object (e.g., rest the end of the mobile device closest to the integrated digital camera against the object at a small angle such as between zero to twenty degrees, with the camera pointing at the object), and may observe the angle between the mobile device and the object using an angle-detecting sensor (e.g., an accelerometer) API of the mobile device. The processing system may instruct the user to adjust the angle (e.g., move the edge of the mobile device furthest from the integrated digital camera up or down, while keeping the top rear edge of the mobile device firmly against the object) until the predefined angle α is achieved (e.g., to within a threshold tolerance, such as plus or minus three degrees).

In step 312, the processing system may generate a second signal to capture and save an image (e.g., a still image) of the object of the target color, using the integrated digital camera of the mobile device. In one example, the integrated digital camera is a rear-facing camera (e.g., a camera whose lens is facing in an opposite direction from the display of the mobile device). In one example, where an angle-detecting sensor (e.g., an accelerometer) is used to monitor a user-adjusted angle between the mobile device and the object as discussed above, the processing system may automatically generate the second signal in response to the processing system detecting (e.g., based on communication with the angle-detecting sensor) that the angle between the mobile device and the object is equal to (or within a predefined tolerance with respect to) the predefined angle α that indicates a specified distance for image capture.

In one example, the image is saved in an open standard raw image file format to maintain the linearity and consistency of the image signal. File formats that involve heavy post-image processing (e.g., demosaicing, noise reduction, lens correction, color correction, exposure and white balance correction, etc.), such as the joint photographic experts group (JPEG) and the tagged image file format (TIFF) formats, may disturb the linearity and consistency of the image signal. In one example, the raw image file format may be any proprietary or non-proprietary raw image file format. One example of a suitable raw image file format is the Adobe Digital Negative Raw Image (DNG) file format. In the DNG file format, the white balance setting of the camera will not affect the values in the images.

In step 314, the processing system may generate a third signal to deactivate (i.e., turn off) the light source. Thus, in one example of the method 300, the light source is activated (i.e., turned on) before the image capture of the target color in step 312. The light source remains activated throughout image capture and is not deactivated until image capture is complete. By keeping the light source on and ensuring that the light source continues to emit light at its highest intensity setting, the ambient light surrounding the object of the target color can be overflooded. Overflooding the ambient light may lessen the effects of the ambient light on the performance of the method 300 and may also reduce the amount of time required to accurately measure the target color.

In optional step 316 (illustrated in phantom), the processing system may extract the raw counts from the red, green, and blue channels of the image. If the integrated digital camera is configured as described above (e.g., in connection with FIGs. 1 and 2), then the image captured in step 312 will comprise a 2D image in which each pixel of the image represents exactly one of the three colors (i.e., red, green, or blue).

In one example, the raw counts from the red, green, and blue channels are extracted in step 316 as follows. First, the middle one third of the image is selected or cropped to produce a region of interest in which the effective illumination angle distribution is reduced. For instance, selecting the middle one third of the image as the region of interest may reduce the effective illumination angle distribution from a first range of approximately thirty-six to fifty-seven degrees to a second range of approximately forty to fifty degrees. Reducing the effective illumination angle distribution may collimate the effective illumination beam, which may facilitate more accurate color measurement of the target color. Additionally, excluding the pixels at the edges of the image from the region of interest may also reduce light scattering and hazing introduced by the lens of the integrated digital camera.

Next, the raw counts (i.e., the numbers of pixels of each color in the region of interest) for each color filter may be averaged to create three averaged raw counts: a red channel averaged raw count d_{R}, a green channel averaged raw count d_{G}, and a blue channel averaged raw count d_{B}. Thus, a single color measurement D, made by the integrated digital camera, may be defined as: $D = \left[\begin{matrix}{d}_{R} \\ {d}_{G} \\ {d}_{B}\end{matrix}\right]$ (EQN. 8).

In optional step 318 (illustrated in phantom), the processing system may calculate a first color tristimulus value, a second color tristimulus value, and a third color tristimulus value for the red channel averaged raw count d_{R}, the green channel averaged raw count d_{G}, and the blue channel averaged raw count d_{B}, respectively, thereby generating a plurality of color tristimulus values.

In one example, the color tristimulus values, which may be defined as R^{T} = [*X̅, Y̅, Z̅*]^{T}*,* may be calculated from the raw counts according to: $\left[\begin{matrix}\overline{X} \\ \overline{Y} \\ \overline{Z}\end{matrix}\right] = {M}_{A} \times \left[\begin{matrix}D \\ 1\end{matrix}\right]$ (EQN. 9). where M_{A} is a 3 x 4 color calibration matrix that converts the averaged raw counts (3 x 1) to the corresponding color tristimulus values (3 x 1). The color calibration matrix M_{A} may be generated from the process by which the integrated digital camera is calibrated, discussed above. In this case, the averaged raw counts for all of the training colors can be combined into a 3 x m matrix, D. Similarly, the 3 x m matrix R_{T} contains the known color tristimulus values of the training colors (under a predefined standard illuminant and CIE color match function).

In optional step 320 (illustrated in phantom), the processing system may calculate a plurality of L*a*b* values for the target color from the plurality of color tristimulus values, using a predefined illuminant. In one example, the predefined illuminant may be the CIE Standard Illuminant D65.

In optional step 322 (illustrated in phantom), the processing system may identify a candidate color in a color library whose L*a*b* values most closely match the L*a*b* values of the target color. In one example, a predefined number of the closest matching candidate colors may be identified (e.g., where the predefined number may equal three). In one example, the color library may be stored locally on the same device as the processing system. In another example, the color library may be stored on a remote database that is accessible to the processing system via a network.

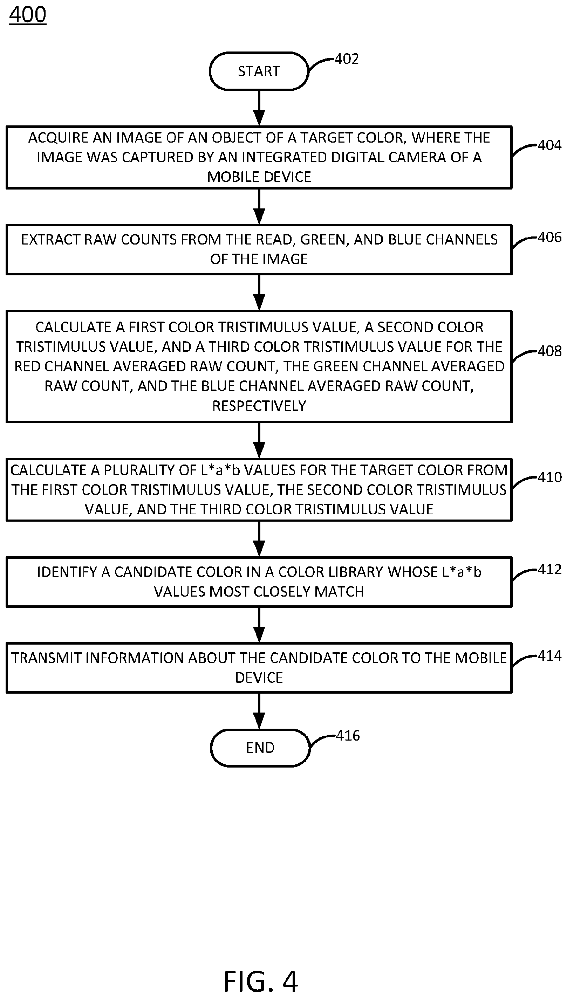

Steps 316-322 are optional, because in one example, steps 316-322 may be performed by another device. For instance, if the processing system is part of the mobile device, steps 316-322 could be performed locally on the mobile device or could be performed remotely, e.g., by a server (as discussed in connection with FIG. 4).

In step 324, the processing system may display the closest matching candidate color (or the predefined number of the closest matching candidate colors) on a display of the mobile device. For instance, the display may show patches of the matching candidate color(s) or may identify the name(s), code(s), or other unique identifier(s) of the matching candidate color(s). The closest matching candidate color(s) may also be saved (either locally on the mobile device or on a remote server) for future reference.

The method 300 may end in step 326.

Once the closest matching candidate color to the target color has been identified, this information can be used to guide the formulation of a color mixture that is intended to match the target color. For instance, information associated with the closest matching candidate color (e.g., associated in the color library) may specify a combination of pigments that, when mixed in specified relative quantities, will produce the target color.

FIG. 4 is a flow chart illustrating another example of a method 400 for color lookup using a mobile device. In one example, the method 400 may be performed, for instance, by the application server 104 of FIGs. 1A and 1B. In another example, the method 400 may be performed by a processor of a computing device, such as the processor 502 illustrated in FIG. 5. For the sake of example, the method 400 is described below as being performed by a processing system.

The method 400 begins in step 402. In step 404, the processing system may acquire an image of an object of a target color, where the image was captured by an integrated digital camera of a remote mobile device that is in communication (e.g., over a network) with the processing system. If the integrated digital camera is configured as described above (e.g., in connection with FIGs. 1 and 2), then the image acquired in step 402 will comprise a 2D image in which each pixel of the image represents exactly one of the three colors (i.e., red, green, or blue).

In step 406, the processing system may extract the raw counts from the red, green, and blue channels of the image of the object. In one example, the raw counts from the red, green, and blue channels are extracted in step 406 as follows. First, the middle one third of the image is selected or cropped to produce a region of interest in which the effective illumination angle distribution is reduced. For instance, selecting the middle one third of the image as the region of interest may reduce the effective illumination angle distribution from a first range of approximately thirty-six to fifty-seven degrees to a second range of approximately forty to fifty degrees. Reducing the effective illumination angle distribution may collimate the effective illumination beam, which may facilitate more accurate color measurement of the target color. Additionally, excluding the pixels at the edges of the image from the region of interest may also reduce light scattering and hazing introduced by the lens of the integrated digital camera.

Next, the raw counts (i.e., the numbers of pixels of each color in the region of interest) for each color filter may be averaged to create three averaged raw counts: a red channel averaged raw count d_{R}, a green channel averaged raw count d_{G}, and a blue channel averaged raw count d_{B}. As discussed above, a single color measurement D, made by the integrated digital camera, may be defined according to EQN. 8 (above).

In step 408, the processing system may calculate a respective color tristimulus value for each of the red channel averaged raw count d_{R}, the green channel averaged raw count d_{G}, and the blue channel averaged raw count d_{B}, thereby generating a plurality of color tristimulus values. In one example, the color tristimulus values, which may be defined as R^{T} = [*X̅, Y̅, Z̅*]^{T}*,* may be calculated from the raw counts according to EQN. 9 (above).

In step 410, the processing system may calculate a plurality of L*a*b* values for the target color from the plurality of color tristimulus values, using a predefined illuminant. In one example, the predefined illuminant may be the International Commission of Illumination (CIE) Standard Illuminant D65.

In step 412, the processing system may identify a candidate color in a color library whose L*a*b* values most closely match the L*a*b* values of the target color. In one example, a predefined number of the closest matching candidate colors may be identified (e.g., where the predefined number may equal three).

In step 414, the processing system may transmit data about the closest matching candidate color (or the predefined number of the closest matching candidate colors) to the mobile device. For instance, the data may include patches of the matching candidate color(s) or may identify the name(s), code(s), or other unique identifier(s) of the matching candidate color(s).

The method 400 may end in step 416.

Thus, the method 300 represents an example in which the color lookup process may be performed entirely by a single device (e.g., the mobile device). For instance, the mobile device may acquire the image of the object of the target color, measure the target color and make any necessary conversions, and perform the lookup in the color library (which may be stored locally or remotely) to identify the closest matching candidate colors. By contrast, the method 400 represents an example in which the color process may be performed in a distributed manner by two or more devices (e.g., the mobile device and a remote server). For instance, the mobile device may acquire the image of the object of the target color, while the remote server may measure the target color and make any necessary conversions, and may perform the lookup in the color library (which may be stored locally or remotely) to identify the closest matching candidate colors. As discussed above, the method 400 may allow the more processing intensive operations to be performed by a device having greater processing capabilities than the mobile device. This may allow results to be obtained more quickly and may also free up memory and processing on the mobile device for other applications.

It should be noted that the method 300 or 400 may be expanded to include additional steps or may be modified to include additional operations with respect to the steps outlined above. In addition, although not specifically specified, one or more steps, functions, or operations of the method 300 or 400 may include a storing, displaying, and/or outputting step as required for a particular application. In other words, any data, records, fields, and/or intermediate results discussed in the method can be stored, displayed, and/or outputted either on the device executing the method or to another device, as required for a particular application. Furthermore, steps, blocks, functions or operations in FIG. 3 or 4 that recite a determining operation or involve a decision do not necessarily require that both branches of the determining operation be practiced. In other words, one of the branches of the determining operation can be deemed as an optional step. Furthermore, steps, blocks, functions or operations of the above described method can be combined, separated, and/or performed in a different order from that described above, without departing from the examples of the present disclosure.

FIG. 5 is a high level block diagram of the color lookup method that is implemented using a computing device 500. In one example, a general purpose computing device 500 comprises a processor 502, a memory 504, a color lookup module 505 and various input/output (I/O) devices 506 such as a display, a keyboard, a mouse, a modem, a network connection and the like. In one example, at least one I/O device is a storage device (*e.g.,* a disk drive, an optical disk drive, a floppy disk drive). It should be understood that the color lookup module 505 can be implemented as a physical device or subsystem that is coupled to a processor through a communication channel.

Alternatively, the color lookup module 505 can be represented by one or more software applications (or even a combination of software and hardware, *e.g*., using Application Specific Integrated Circuits (ASIC)), where the software is loaded from a storage medium (*e.g*., I/O devices 506) and operated by the processor 502 in the memory 504 of the general purpose computing device 500. Additionally, the software may run in a distributed or partitioned fashion on two or more computing devices similar to the general purpose computing device 500. Thus, in one example, the color lookup module 505 for calibrating a multi-channel color measurement instrument in the field described herein with reference to the preceding Figures can be stored on a computer readable medium or carrier (*e*.*g*., RAM, magnetic or optical drive or diskette, and the like).

It should be noted that although not explicitly specified, one or more steps of the methods described herein may include a storing, displaying and/or outputting step as required for a particular application. In other words, any data, records, fields, and/or intermediate results discussed in the methods can be stored, displayed, and/or outputted to another device as required for a particular application. Furthermore, steps or blocks in the accompanying Figures that recite a determining operation or involve a decision, do not necessarily require that both branches of the determining operation be practiced. In other words, one of the branches of the determining operation can be deemed as an optional step.

Although various examples which incorporate the teachings of the present disclosure have been shown and described in detail herein, those skilled in the art can readily devise many other varied examples that still incorporate these teachings.

## Claims

1. A method, comprising:
generating (308), by a processing system (502) of a mobile device (500), a first signal to activate a light source of the mobile device (500);
tracking, by the processing system (502), a location of a specular hot spot in a live image of an object of a target color that is being displayed on a display of the mobile device (500), wherein the specular hot spot is caused by the object reflecting a portion of light emitted by the light source;
determining, by the processing system (502), that the mobile device (500) is positioned an optimal distance from the object when the location of the specular hot spot matches a known optimal location of the specular hot spot that is associated with a make and model of the mobile device (500);
acquiring (404), by the processing system, an image of the object, wherein the image was captured by an integrated digital camera of the mobile device (500);
calculating (408), by the processing system (502), a first set of values that describes the target color, wherein the calculating is based on an analysis of a pixel of the image; and
identifying (412), by the processing system (502), a first candidate color from among a plurality of candidate colors in a color library, wherein each candidate color in the plurality of candidate colors is associated with a second set of values that describes the each candidate color, and wherein the second set of values describing the first candidate color matches the first set of values more closely than any second set of values associated with another candidate color of the plurality of candidate colors.

2. The method of claim 1, wherein the acquiring (404) comprises:
generating (312), by the processing system (502), a second signal to capture and save the image by the integrated digital camera, subsequent to generating the first signal; and
generating (314), by the processing system (502), a third signal to deactivate the light source, subsequent to generating the second signal.

3. The method of claim 2, wherein the light source is a light emitting diode flashlight of the mobile device (500).

4. The method of claim 2 or 3, wherein the acquiring (404) further comprises:
providing, by the processing system (502) and prior to the generating (308) the first signal, an image overlay including a box positioned over the live image of the object; and
instructing, by the processing system (502), a user of the mobile device to position the mobile device so that the object is positioned within the box on the display of the mobile device (500).

5. The method of claim 4, wherein a 45/0 illumination geometry is formed between the light source and the object when the object is positioned within the box on the display of the mobile device (500).

6. The method of claim 4, wherein the providing comprises:
monitoring, by the processing system (502), an angle between the mobile (500) device and the object as the user holds the mobile device (500) against a surface of the object and tilts an edge of the mobile device (500) away from the object,
wherein the monitoring is achieved through communication with an angle-detecting sensor of the mobile device (500), and
wherein the processing system (502) generates the second signal automatically in response to detecting, via the monitoring, that the angle between the mobile device (500) and the object is equal to a predefined angle.

7. The method of any preceding claim, further comprising placing the mobile device (500) in a case that creates a gap between the integrated digital camera and the object of the target color when the mobile phone rests against the object of the target color while placed in the case.

8. The method of any preceding claim, wherein the first set of values describes the target color in a first color space that approximates a perception of color by a human eye.

9. The method of claim 8, wherein the calculating (408) comprises:
calculating (316), by the processing system, a red channel average raw count, a green channel averaged raw count, and a blue channel averaged raw count for the image;
converting (318) the red channel average raw count, the green channel averaged raw count, and the blue channel averaged raw count to a first color tristimulus value, a second color tristimulus value, and a third color tristimulus value, respectively, using a color calibration matrix, wherein the first color tristimulus value, the second color tristimulus value, and the third color tristimulus value describe the target color in a second color space different from the first color space.

10. The method of claim 9, wherein the first color space is an International Commission of Illumination L*a*b* color space, and the second color space is an International Commission of Illumination 1931 XYZ color space.

11. The method of any preceding claim, further comprising:
calibrating, by the processing system (502), the integrated digital camera prior to the acquiring;
wherein the calibrating comprises:
capturing, by the processing system (502), a plurality of images of a plurality of training colors, using the integrated digital camera;
obtaining, by the processing system (502), a first matrix for each training color of the plurality of training colors, wherein the first matrix contains known color tristimulus values of the each training color;
calculating, by the processing system (502), a second matrix for each image of the plurality of images, wherein the second matrix contains a plurality of averaged raw counts for the each image, and wherein each averaged raw count of the plurality of raw counts corresponds to pixels of one color in the each image; and
estimating, by the processing system (502), a third matrix and a vector that map the second matrix to the first matrix.

12. The method of any preceding claim, further comprising:
calibrating, by the processing system (502), the integrated digital camera prior to the acquiring;
wherein the calibrating comprises a linear correction process comprising:
capturing, by the processing system (502), a first plurality of images of a black sample and a second plurality of images of a white sample, using the integrated digital camera;
calculating, by the processing system (502), a first plurality of raw counts from the first plurality of images, wherein each raw count of the first plurality of raw counts corresponds to pixels of one color in each image of the first plurality of images;
calculating, by the processing system (502), a second plurality of raw counts from the second plurality of images, wherein each raw count of the second plurality of raw counts corresponds to pixels of one color in each image of the second plurality of images;
obtaining, by the processing system (502), a third plurality of raw counts, wherein each raw count of the third plurality of raw counts corresponds to pixels of one color in each image of a third plurality of images of the black sample, as measured by a master instrument of a same make and model as the mobile device (500);
obtaining, by the processing system (502), a fourth plurality of raw counts, wherein each raw count of the fourth plurality of raw counts corresponds to pixels of one color in each image of a fourth plurality of images of the white sample, as measured by the master instrument; and
calculating, by the processing system (502), a plurality of coefficients that map that first plurality of raw counts and the second plurality of raw counts to the third plurality of raw counts and the fourth plurality of raw counts.

13. A non-transitory computer-readable medium (506) storing instructions which, when executed by a processing system (502) of a mobile device (500), cause the processing system (502) to perform operations, the operations comprising:
acquiring (404) an image of an object of a target color, wherein the image was captured by an integrated digital camera of the mobile device (500), wherein the acquiring comprises:
providing, by the processing system (502), an image overlay including a box positioned over a live image of the object being displayed on a display of the mobile device (500); and
instructing, by the processing system (502), a user of the mobile device to position the mobile device so that the object is positioned within the box on the display of the mobile device (500); and
monitoring, by the processing system (502), an angle between the mobile (500) device and the object as the user holds the mobile device (500) against a surface of the object and tilts an edge of the mobile device (500) away from the object; and
generating (312), by the processing system (502), a signal to capture and save the image by the integrated digital camera, in response to detecting, via the monitoring, that the angle between the mobile device (500) and the object is equal to a predefined angle;
calculating (408) a first set of values that describes the target color, wherein the calculating is based on an analysis of a pixel of the image; and
identifying (412) a first candidate color from among a plurality of candidate colors in a color library, wherein each candidate color in the plurality of candidate colors is associated with a second set of values that describes the each candidate color, and wherein the second set of values describing the first candidate color matches the first set of values more closely than any second set of values associated with another candidate color of the plurality of candidate colors.

## Patentansprüche

1. Verfahren, umfassend:
Erzeugen (308), durch ein Verarbeitungssystem (502) einer Mobilvorrichtung (500), eines ersten Signals zum Aktivieren einer Lichtquelle der Mobilvorrichtung (500);
Verfolgen, durch das Verarbeitungssystem (502), einer Position eines spiegelnden Hotspots in einem Live-Bild eines Objekts mit einer Zielfarbe, das auf einem Display der Mobilvorrichtung (500) angezeigt wird, wobei der spiegelnde Hotspot entsteht dadurch, dass das Objekt einen Teil des von der Lichtquelle ausgesendeten Lichts reflektiert;
Feststellen, durch das Verarbeitungssystem (502), dass sich die Mobilvorrichtung (500) in einem optimalen Abstand zu dem Objekt befindet, wenn die Position des spiegelnden Hotspots mit einer bekannten optimalen Position des spiegelnden Hotspots übereinstimmt, die einer Marke und einem Modell der Mobilvorrichtung (500) zugeordnet ist;
Erfassen (404), durch das Verarbeitungssystem, eines Bildes des Objekts, wobei das Bild mit einer integrierten Digitalkamera der Mobilvorrichtung (500) aufgenommen wurde;
Berechnen (408), durch das Verarbeitungssystem (502), eines ersten Wertesatzes, der die Zielfarbe beschreibt, wobei das Berechnen auf einer Analyse eines Pixels des Bildes basiert; und
Identifizieren (412), durch das Verarbeitungssystem (502), einer ersten Kandidatenfarbe aus einer Vielzahl von Kandidatenfarben in einer Farbbibliothek, wobei jede Kandidatenfarbe in der Vielzahl von Kandidatenfarben einem zweiten Wertesatz zugeordnet ist, der die jeweilige Kandidatenfarbe beschreibt, und wobei der zweite Wertesatz, der die erste Kandidatenfarbe beschreibt, besser mit dem ersten Wertesatz übereinstimmt als jeder zweite Wertesatz, der einer anderen Kandidatenfarbe aus der Vielzahl von Kandidatenfarben zugeordnet ist.

2. Verfahren nach Anspruch 1, wobei das Erfassen (404) Folgendes umfasst:
Erzeugen (312), durch das Verarbeitungssystem (502), eines zweiten Signals zum Aufnehmen und Speichern des Bildes mit der integrierten Digitalkamera, nachdem das erste Signal erzeugt wurde; und
Erzeugen (314), durch das Verarbeitungssystem (502), eines dritten Signal zum Deaktivieren der Lichtquelle, nachdem das zweite Signal erzeugt wurde.

3. Verfahren nach Anspruch 2, wobei die Lichtquelle eine Leuchtdioden-Taschenlampe der Mobilvorrichtung (500) ist.

4. Verfahren nach Anspruch 2 oder 3, wobei das Erfassen (404) weiter Folgendes umfasst:
Bereitstellen, durch das Verarbeitungssystem (502) und vor dem Erzeugen (308) des ersten Signals, einer Bildüberlagerung, die einen über dem Live-Bild des Objekts positionierten Rahmen enthält; und
Anweisen, durch das Verarbeitungssystem (502), eines Benutzer der Mobilvorrichtung, die Mobilvorrichtung so zu positionieren, dass sich das Objekt innerhalb des Rahmens auf dem Display der Mobilvorrichtung (500) befindet.

5. Verfahren nach Anspruch 4, wobei eine 45/0-Beleuchtungsgeometrie zwischen der Lichtquelle und dem Objekt entsteht, wenn sich das Objekt innerhalb des Rahmens auf dem Display der Mobilvorrichtung (500) befindet.

6. Verfahren nach Anspruch 4, wobei das Bereitstellen Folgendes umfasst:
Überwachen, durch das Verarbeitungssystem (502), eines Winkels zwischen der Mobilvorrichtung (500) und dem Objekt, während der Benutzer die Mobilvorrichtung (500) an eine Oberfläche des Objekts hält und eine Kante der Mobilvorrichtung (500) von dem Objekt weg neigt,
wobei das Überwachen durch Kommunikation mit einem Winkelerfassungssensor der Mobilvorrichtung (500) erfolgt, und
wobei das Verarbeitungssystem (502) das zweite Signal automatisch erzeugt, als Reaktion auf das Erkennen anhand der Überwachung, dass der Winkel zwischen der Mobilvorrichtung (500) und dem Objekt einem vordefinierten Winkel entspricht.

7. Verfahren nach einem vorstehenden Anspruch, weiter umfassend das Platzieren der Mobilvorrichtung (500) in einer Hülle, die einen Spalt zwischen der integrierten Digitalkamera und dem Objekt mit der Zielfarbe schafft, wenn das Mobiltelefon in der Hülle liegend an dem Objekt mit der Zielfarbe anliegt.

8. Verfahren nach einem vorstehenden Anspruch, wobei der erste Wertesatz die Zielfarbe in einem ersten Farbraum beschreibt, der die Farbwahrnehmung des menschlichen Auges annähernd wiedergibt.

9. Verfahren nach Anspruch 8, wobei das Berechnen (408) Folgendes umfasst:
Berechnen (316), durch das Verarbeitungssystem, eines gemittelten Rohzählwerts für den Rotkanal, eines gemittelten Rohzählwerts für den Grünkanal und eines gemittelten Rohzählwerts für den Blaukanal des Bildes;
Umwandeln (318) des gemittelten Rohzählwerts für den Rotkanal, des gemittelten Rohzählwerts für den Grünkanal und des gemittelten Rohzählwerts für den Blaukanal mithilfe einer Farbkalibrierungsmatrix in einen ersten Farbtristimuluswert, einen zweiten Farbtristimuluswert bzw. einen dritten Farbtristimuluswert, wobei der erste Farbtristiumuluswert, der zweite Farbtristimuluswert und der dritte Farbtristimuluswert die Zielfarbe in einem zweiten Farbraum beschreiben, der sich von dem ersten Farbraum unterscheidet.

10. Verfahren nach Anspruch 9, wobei der erste Farbraum ein L*a*b*-Farbraum der Internationalen Beleuchtungskommission ist, und der zweite Farbraum ein 1931-XYZ-Farbraum der Internationalen Beleuchtungskommission ist.

11. Verfahren nach einem vorstehenden Anspruch, weiter umfassend:
Kalibrieren, durch das Verarbeitungssystem (502), der integrierten Digitalkamera vor dem Erfassen;
wobei das Kalibrieren Folgendes umfasst:
Aufnehmen, durch das Verarbeitungssystem (502), einer Vielzahl von Bildern einer Vielzahl von Trainingsfarben unter Verwendung der integrierten Digitalkamera;
Erhalten, durch das Verarbeitungssystem (502), einer ersten Matrix für jede Trainingsfarbe der Vielzahl von Trainingsfarben, wobei die erste Matrix bekannte Farbtristimuluswerte der jeweiligen Trainingsfarbe enthält;
Berechnen, durch das Verarbeitungssystem (502), einer zweiten Matrix für jedes Bild der Vielzahl von Bildern, wobei die zweite Matrix eine Vielzahl gemittelter Rohzählwerte für jedes Bild enthält, und wobei jeder gemittelte Rohzählwert der Vielzahl von Rohzählwerten den Pixeln einer einzelnen Farbe in jedem Bild entspricht; und
Schätzen, durch das Verarbeitungssystem (502), einer dritten Matrix und eines Vektors, die die zweite Matrix auf die erste Matrix abbilden.

12. Verfahren nach einem vorstehenden Anspruch, weiter umfassend:
Kalibrieren, durch das Verarbeitungssystem (502), der integrierten Digitalkamera vor dem Erfassen;
wobei das Kalibrieren einen linearen Korrekturprozess umfasst, der Folgendes umfasst:
Aufnehmen, durch das Verarbeitungssystem (502), einer ersten Vielzahl von Bildern einer schwarzen Probe und einer zweiten Vielzahl von Bildern einer weißen Probe unter Verwendung der integrierten Digitalkamera;
Berechnen, durch das Verarbeitungssystem (502), einer ersten Vielzahl von Rohzählwerten aus der ersten Vielzahl von Bildern, wobei jeder Rohzählwert der ersten Vielzahl von Rohzählwerten Pixeln einer einzelnen Farbe in jedem Bild der ersten Vielzahl von Bildern entspricht;
Berechnen, durch das Verarbeitungssystem (502), einer zweiten Vielzahl von Rohzählwerten aus der zweiten Vielzahl von Bildern, wobei jeder Rohzählwert der zweiten Vielzahl von Rohzählwerten Pixeln einer einzelnen Farbe in jedem Bild der zweiten Vielzahl von Bildern entspricht;
Erhalten, durch das Verarbeitungssystem (502), einer dritten Vielzahl von Rohzählwerten, wobei jeder Rohzählwert der dritten Vielzahl von Rohzählwerten Pixeln einer einzelnen Farbe in jedem Bild einer dritten Vielzahl von Bildern der schwarzen Probe entspricht, gemessen mit einem Masterinstrument gleicher Marke und gleichen Modells wie die Mobilvorrichtung (500);
Erhalten, durch das Verarbeitungssystem (502), einer vierten Vielzahl von Rohzählwerten, wobei jeder Rohzählwert der vierten Vielzahl von Rohzählwerten Pixeln einer einzelnen Farbe in jedem Bild einer vierten Vielzahl von Bildern der weißen Probe entspricht, gemessen mit dem Masterinstrument; und
Berechnen, durch das Verarbeitungssystem (502), einer Vielzahl von Koeffizienten, die die erste Vielzahl von Rohzählwerten und die zweite Vielzahl von Rohzählwerten auf die dritte Vielzahl von Rohzählwerten und die vierte Vielzahl von Rohzählwerten abbilden.

13. Nichtflüchtiges, computerlesbares Medium (506), das Anweisungen speichert, die, wenn sie durch ein Verarbeitungssystem (502) einer Mobilvorrichtung (500) ausgeführt werden, das Verarbeitungssystem (502) veranlassen, Operationen durchzuführen, wobei die Operationen Folgendes umfassen:
Erfassen (404) eines Bildes eines Objekts mit einer Zielfarbe, wobei das Bild mit einer integrierten Digitalkamera der Mobilvorrichtung (500) aufgenommen wurde, wobei das Erfassen Folgendes umfasst:
Bereitstellen, durch das Verarbeitungssystem (502), einer Bildüberlagerung, die einen über einem Live-Bild des auf einem Display der Mobilvorrichtung (500) angezeigten Objekts positionierten Rahmen enthält; und
Anweisen, durch das Verarbeitungssystem (502), eines Benutzer der Mobilvorrichtung, die Mobilvorrichtung so zu positionieren, dass sich das Objekt innerhalb des Rahmens auf dem Display der Mobilvorrichtung (500) befindet; und
Überwachen, durch das Verarbeitungssystem (502), eines Winkels zwischen der Mobilvorrichtung (500) und dem Objekt, während der Benutzer die Mobilvorrichtung (500) an eine Oberfläche des Objekts hält und eine Kante der Mobilvorrichtung (500) von dem Objekt weg neigt; und
Erzeugen (312), durch das Verarbeitungssystem (502), eines Signals zum Aufnehmen und Speichern des Bildes mit der integrierten Digitalkamera, als Reaktion auf das Erkennen anhand der Überwachung, dass der Winkel zwischen der Mobilvorrichtung (500) und dem Objekt einem vordefinierten Winkel entspricht;
Berechnen (408) eines ersten Wertesatzes, der die Zielfarbe beschreibt, wobei das Berechnen auf einer Analyse eines Pixels des Bildes basiert; und
Identifizieren (412) einer ersten Kandidatenfarbe aus einer Vielzahl von Kandidatenfarben in einer Farbbibliothek, wobei jede Kandidatenfarbe in der Vielzahl von Kandidatenfarben einem zweiten Wertesatz zugeordnet ist, der die jeweilige Kandidatenfarbe beschreibt, und wobei der zweite Wertesatz, der die erste Kandidatenfarbe beschreibt, besser mit dem ersten Wertesatz übereinstimmt als jeder zweite Wertesatz, der einer anderen Kandidatenfarbe aus der Vielzahl von Kandidatenfarben zugeordnet ist.

## Revendications

1. Procédé, comprenant :
la génération (308), par un système de traitement (502) d'un dispositif mobile (500), d'un premier signal pour activer une source de lumière du dispositif mobile (500) ;
le suivi, par le système de traitement (502), d'un emplacement de point chaud spéculaire dans une image en direct d'un objet d'une couleur cible qui est affichée sur un écran du dispositif mobile (500), dans lequel le point chaud spéculaire est causé par l'objet réfléchissant une partie de la lumière émise par la source de lumière ;
la détermination, par le système de traitement (502), que le dispositif mobile (500) est positionné à une distance optimale de l'objet lorsque l'emplacement du point chaud spéculaire correspond à un emplacement optimal connu du point chaud spéculaire qui est associé à une marque et à un modèle du dispositif mobile (500) ;
l'acquisition (404), par le système de traitement, d'une image de l'objet, dans lequel l'image a été capturée par une caméra numérique intégrée du dispositif mobile (500) ;
le calcul (408), par le système de traitement (502), d'un premier ensemble de valeurs qui décrit la couleur cible, dans lequel le calcul est basé sur une analyse d'un pixel de l'image ; et
l'identification (412), par le système de traitement (502), d'une première couleur candidate parmi une pluralité de couleurs candidates dans une bibliothèque de couleurs, dans lequel chaque couleur candidate de la pluralité de couleurs candidates est associée à un second ensemble de valeurs qui décrit chaque couleur candidate, et dans lequel le second ensemble de valeurs décrivant la première couleur candidate correspond plus étroitement au premier ensemble de valeurs que tout second ensemble de valeurs associé à une autre couleur candidate de la pluralité de couleurs candidates.

2. Procédé selon la revendication 1, dans lequel l'acquisition (404) comprend :
la génération (312), par le système de traitement (502), d'un deuxième signal pour capturer et enregistrer l'image par la caméra numérique intégrée, après génération du premier signal ; et
la génération (314), par le système de traitement (502), d'un troisième signal pour désactiver la source de lumière, après génération du deuxième signal.

3. Procédé selon la revendication 2, dans lequel la source de lumière est une lampe torche à diode électroluminescente du dispositif mobile (500).

4. Procédé selon la revendication 2 ou 3, dans lequel l'acquisition (404) comprend en outre :
la fourniture, par le système de traitement (502) et avant la génération (308) du premier signal, d'une superposition d'image incluant une zone positionnée sur l'image en direct de l'objet ; et
la demande, par le système de traitement (502), à un utilisateur du dispositif mobile de positionner le dispositif mobile de sorte que l'objet soit positionné à l'intérieur de la zone sur l'écran du dispositif mobile (500).

5. Procédé selon la revendication 4, dans lequel une géométrie d'éclairage 45/0 se forme entre la source de lumière et l'objet lorsque l'objet est positionné dans la zone sur l'écran du dispositif mobile (500).

6. Procédé selon la revendication 4, dans lequel la fourniture comprend :
la surveillance, par le système de traitement (502), d'un angle entre le dispositif mobile (500) et l'objet lorsque l'utilisateur tient le dispositif mobile (500) contre une surface de l'objet et incline un bord du dispositif mobile (500) à l'opposé de l'objet,
dans lequel la surveillance est réalisée par communication avec un capteur de détection d'angle du dispositif mobile (500), et
dans lequel le système de traitement (502) génère automatiquement le deuxième signal en réponse à la détection, par le biais de la surveillance, que l'angle entre le dispositif mobile (500) et l'objet est égal à un angle prédéfini.

7. Procédé selon une quelconque revendication précédente, comprenant en outre le placement du dispositif mobile (500) dans une coque qui crée un espace entre la caméra numérique intégrée et l'objet de la couleur cible lorsque le téléphone mobile repose contre l'objet de la couleur cible en étant placé dans la coque.

8. Procédé selon une quelconque revendication précédente, dans lequel le premier ensemble de valeurs décrit la couleur cible dans un premier espace colorimétrique qui se rapproche de la perception de la couleur par l'œil humain.

9. Procédé selon la revendication 8, dans lequel le calcul (408) comprend :
le calcul (316), par le système de traitement, d'un compte brut moyen de canal rouge, d'un compte brut moyen de canal vert et d'un compte brut moyen de canal bleu pour l'image ;
la conversion (318) du compte brut moyen de canal rouge, du compte brut moyen de canal vert et du compte brut moyen de canal bleu en une composante trichromatique de première couleur, une composante trichromatique de deuxième couleur et une composante trichromatique de troisième couleur, respectivement, en utilisant une matrice d'étalonnage des couleurs, dans lequel la composante trichromatique de première couleur, la composante trichromatique de deuxième couleur et la composante trichromatique de troisième couleur décrivent la couleur cible dans un second espace colorimétrique différent du premier espace colorimétrique.

10. Procédé selon la revendication 9, dans lequel le premier espace colorimétrique est un espace colorimétrique L*a*b* de la Commission internationale de l'éclairage et le second espace colorimétrique est un espace colorimétrique XYZ de la Commission internationale de l'éclairage de 1931.

11. Procédé selon une quelconque revendication précédente, comprenant en outre :
l'étalonnage, par le système de traitement (502), de la caméra numérique intégrée avant l'acquisition ;
dans lequel l'étalonnage comprend :
la capture, par le système de traitement (502), d'une pluralité d'images d'une pluralité de couleurs de formation, à l'aide de la caméra numérique intégrée ;
l'obtention, par le système de traitement (502), d'une première matrice pour chaque couleur de formation de la pluralité de couleurs de formation, dans lequel la première matrice contient des composantes trichromatiques de couleurs connues de chaque couleur de formation ;
le calcul, par le système de traitement (502), d'une deuxième matrice pour chaque image de la pluralité d'images, dans lequel la deuxième matrice contient une pluralité de comptes bruts moyens pour chaque image, et dans lequel chaque compte brut moyen de la pluralité de comptes bruts correspond à des pixels d'une couleur dans chaque image ; et
l'estimation, par le système de traitement (502), d'une troisième matrice et d'un vecteur qui mappent la deuxième matrice sur la première matrice.

12. Procédé selon une quelconque revendication précédente, comprenant en outre :
l'étalonnage, par le système de traitement (502), de la caméra numérique intégrée avant l'acquisition ;
dans lequel l'étalonnage comprend un processus de correction linéaire comprenant :
la capture, par le système de traitement (502), d'une première pluralité d'images d'un échantillon noir et d'une deuxième pluralité d'images d'un échantillon blanc, à l'aide de la caméra numérique intégrée ;
le calcul, par le système de traitement (502), d'une première pluralité de comptes bruts à partir de la première pluralité d'images, dans lequel chaque compte brut de la première pluralité de comptes bruts correspond à des pixels d'une couleur dans chaque image de la première pluralité d'images ;
le calcul, par le système de traitement (502), d'une deuxième pluralité de comptes bruts à partir de la deuxième pluralité d'images, dans lequel chaque compte brut de la deuxième pluralité de comptes bruts correspond à des pixels d'une couleur dans chaque image de la deuxième pluralité d'images ;
l'obtention, par le système de traitement (502), d'une troisième pluralité de comptes bruts, dans lequel chaque compte brut de la troisième pluralité de comptes bruts correspond à des pixels d'une couleur dans chaque image d'une troisième pluralité d'images de l'échantillon noir, tels que mesurés par un instrument maître de même marque et de même modèle que le dispositif mobile (500) ;
l'obtention, par le système de traitement (502), d'une quatrième pluralité de comptes bruts, dans lequel chaque compte brut de la quatrième pluralité de comptes bruts correspond à des pixels d'une couleur dans chaque image d'une quatrième pluralité d'images de l'échantillon blanc, tels que mesurés par l'instrument maître ; et
le calcul, par le système de traitement (502), d'une pluralité de coefficients qui mappent cette première pluralité de comptes bruts et la deuxième pluralité de comptes bruts sur la troisième pluralité de comptes bruts et la quatrième pluralité de comptes bruts.

13. Support non transitoire lisible par ordinateur (506) stockant des instructions qui, lorsqu'elles sont exécutées par un système de traitement (502) d'un dispositif mobile (500), amènent le système de traitement (502) à effectuer des opérations, les opérations comprenant :
l'acquisition (404) d'une image d'un objet de couleur cible, dans lequel l'image est capturée par une caméra numérique intégrée du dispositif mobile (500), dans lequel l'acquisition comprend :
la fourniture, par le système de traitement (502), d'une superposition d'image incluant une zone positionnée sur une image en direct de l'objet affiché sur un écran du dispositif mobile (500) ; et
la demande, par le système de traitement (502), à un utilisateur du dispositif mobile de positionner le dispositif mobile afin que l'objet soit positionné à l'intérieur de la zone affichée sur l'écran du dispositif mobile (500) ; et
la surveillance, par le système de traitement (502), d'un angle entre le dispositif mobile (500) et l'objet lorsque l'utilisateur tient le dispositif mobile (500) contre une surface de l'objet et incline un bord du dispositif mobile (500) à l'opposé de l'objet ; et
la génération (312), par le système de traitement (502), d'un signal pour capturer et enregistrer l'image par la caméra numérique intégrée, en réponse à la détection, par le biais de la surveillance, que l'angle entre le dispositif mobile (500) et l'objet est égal à un angle prédéfini ;
la calcul (408) d'un premier ensemble de valeurs qui décrit la couleur cible, dans lequel le calcul est basé sur une analyse d'un pixel de l'image ; et
l'identification (412) d'une première couleur candidate parmi une pluralité de couleurs candidates dans une bibliothèque de couleurs, dans lequel chaque couleur candidate de la pluralité de couleurs candidates est associée à un second ensemble de valeurs qui décrit chaque couleur candidate, et dans lequel le second ensemble de valeurs décrivant la première couleur candidate correspond plus étroitement au premier ensemble de valeurs que tout second ensemble de valeurs associé à une autre couleur candidate de la pluralité de couleurs candidates.
